Europäisches Patentamt

European Patent Office

Office européen des brevets

(11) Numéro de publication: **0 246 174**
**A1**

# DEMANDE DE BREVET EUROPEEN

(21) Numéro de dépôt: **87470007.3**

(22) Date de dépôt: **29.04.87**

(51) Int. Cl.⁴: **A 23 L 1/272**
**A 23 L 1/302**

(30) Priorité: **29.04.86 FR 8606368**

(43) Date de publication de la demande:
**19.11.87 Bulletin 87/47**

(84) Etats contractants désignés:
**BE DE ES FR IT LU NL**

(71) Demandeur: **EXTRAITS NOIROT Société Anonyme**
**18, Rue des fabriques**
**F-54000 Nancy (FR)**

(72) Inventeur: **Gossot, Françoise**
**Rue du Clos des Grèves**
**F-54200 Toul (FR)**

**Boirre, Paul-Henri**
**17 rue de la Foucotte**
**F-54000 Nancy (FR)**

(74) Mandataire: **Poupon, Michel**
**3, rue Thiers**
**F-88000 Epinal (FR)**

(54) Procédé pour l'obtention d'un effet de fluorescences et produits obtenus selon ce procédé.

(57) Procédé pour l'obtention d'un effet de fluorescence dans un solide ou dans un liquide libre, inerte ou circulant. L'agent de fluorescence est un produit ingescible, de préférence la riboflavine.

Applications : industrie alimentaire, industrie du gadget.

EP 0 246 174 A1

Bundesdruckerei Berlin

## Description

### Procédé pour l'obtention d'un effet de fluorescence et produits obtenus selon ce procédé.

La présente invention a pour objet un procédé pour l'obtention d'un effet de fluorescence dans un liquide libre, inerte ou circulant, ou dans des solides, lesdits liquides et solides pouvant être destinés à la consommation humaine.

Il est connu de longue date d'utiliser les effets de la fluorescence pour des produits et gadgets divers, l'agrément fourni par la fluorescence étant extrêmement esthétique à l'oeil et recherché par les consommateurs.

L'invention a pour objet un nouveau domaine d'application totalement inexploré des effets de fluorescence, qui prend en compte les soucis de recherche d'effets esthétiques et inattendus dans le quotidien du consommateur.

Conformément à l'invention, ce résultat est obtenu avec un procédé pour l'obtention d'un effet de fluorescence dans un liquide libre, inerte ou circulant, ou dans des solides, lesdits liquides et solides pouvant être destinés à la consommation humaine, caractérisé en ce qu'il consiste à utiliser un agent de fluorescence ingescible par l'être humain.

Grâce à la mise en oeuvre de ce procédé, on réalise en fait un double objectif :
- il est possible de remplacer dans les applications usuelles des produits fluorescents les produits habituellement utilisés par un produit qui ne soit pas toxique. Il en découle une sécurité accrue en partaiculier pour le risque d'ingestion accidentelle par les enfants.
- il est également possible, et c'est une caractéristique essentielle de l'invention, de créer des produits présentant un effet de fluorescence qui soient ingescibles ou comestibles per se et par destination.

Selon un mode particulièrement avantageux de mise en oeuvre de l'invention, on prévoiera que l'agent de fluorescence est la riboflavine.

La riboflavine, ou encore vitamine B 2, est un produit connu de longue date, qui selon les normes européennes ne présente aucune Dose Journalière Admise (DJA) et qui peut donc être ingéré sans risque pour le consommateur.

En outre, et c'est là un effet tout à fait inattendu, la riboflavine, qu'elle soit obtenue par synthèe chimique ou par extraction à partir de produits naturels, présente un effet de fluorescence à toutes les concentrations d'utilisation, en milieu solide ou liquide, à toute température et en présence de lumière naturelle ou artificielle.

En outre la riboflavine est très hydrosoluble. De manière préférentielle, la concentration d'utilisation sera comprise entre 10 ppm et 0,4 g/litre.

Selon une application tout à fait spécifique, on peut obtenir conformément à l'invention des solides, plus particulièrement des glaçons pour le rafraichissement des boissons destinées à la consommation humaine.

Etant donné que la riboflavine est très hydrosoluble et présente un effet de fluorescence à toute température, l'effet esthétique obtenu est remarquable et inattendu ;

Cet effet est renforcé par le fait que, lors de la congélation du liquide contenant la riboflavine pour la transformer en glaçons, celle-ci se répartit de manière très uniforme, sans cristallisation ni zone préférentielle de concentration.

On comprendra que l'invention n'est pas limitée au seul mode de mise en oeuvre décrit. Elle recouvre au contraire toutes les applications du procédé selon l'invention, mettant en oeuvre un agent de fluorescence ingescible, plus particulièrement la riboflavine.

## Revendications

1. Procédé pour l'obtention d'un effet de fluorescence dans un liquide libre, inerte ou circulant, ou dans des solides, lesdits liquides et solides étant éventuellement destinés à la consommation humaine, caractérisé en ce qu'il consiste à utiliser un agent de fluorescence ingescible par l'être humain.

2. Procédé selon la revendication 1, caractérisé en ce que l'agent de fluoescence est de la riboflavine.

3. Procédé selon la revendication 2, caractérisé en ce que la riboflavine est utilisée à une concentration comprise entre 10 ppm et 0,4 g/litre.

4. Produit liquide ou solide fluorescent ingescible par l'être humain, caractérisé en ce qu'il contient de la riboflavine en tant qu'agent de fluorescence.

5. Produit solide selon la revendication 4, caractérisé en ce qu'il s'agit d'un glaçon pour le rafraichissement des boissons.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,Y | CHEMICAL ABSTRACTS, vol. 77, no. 1, 3 juillet 1972, page 366, résumé no. 3921b, Columbus, Ohio, US; M.P. KADZHAYA et al.: "Use of riboflavine as a food dye for coloring marmalades", & TR. GRUZ. NAUCH.-ISSLED. INST. PISHCH. PROM. 1971, NO. 4, 326-7 * Abstract * | 1-5 | A 23 L    1/272 A 23 L    1/302 |
| | --- | | |
| X,Y | FOOD CHEMICAL CODEX, 3e édition, 1981, page 262, National Academy Press, Washington, US; * Page 262, colonne 2, alinéa 2 * | 1-5 | |
| | ----- | | |

**DOMAINES TECHNIQUES RECHERCHES (Int. Cl.4)**

A 23 L

Le présent rapport de recherche a été établi pour toutes les revendications

| Lieu de la recherche | Date d'achèvement de la recherche | Examinateur |
|---|---|---|
| LA HAYE | 25-08-1987 | VAN MOER A.M.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82